**Europäisches Patentamt**

**European Patent Office**

**Office européen des brevets**

(19)

(11) Numéro de publication : **0 192 498**
**B1**

(12) # FASCICULE DE BREVET EUROPÉEN

(45) Date de publication du fascicule du brevet :
**15.06.88**

(51) Int. Cl.⁴ : **F 02 M 37/00**, B 60 K 15/00

(21) Numéro de dépôt : **86400018.7**

(22) Date de dépôt : **07.01.86**

(54) Crépine d'aspiration de gazole dans un réservoir notamment dans un véhicule.

(30) Priorité : **01.02.85 FR 8501448**

(43) Date de publication de la demande :
**27.08.86 Bulletin 86/35**

(45) Mention de la délivrance du brevet :
**15.06.88 Bulletin 88/24**

(84) Etats contractants désignés :
**DE FR GB IT**

(56) Documents cités :
DE-A- 3 122 194
GB-A- 2 031 994
US-A- 3 768 730
US-A- 4 481 931
PATENTS ABSTRACTS OF JAPAN, vol. 7, no. 173 (M-232) [1318], 30 juillet 1983; & JP - A - 58 77 158 (TOYOTA JIDOSHA KOGYO K.K.) 10-05-1983

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Blondeau, Michel**
**11 rue des Chardonnerets**
**F-25550 Bavans (FR)**

(74) Mandataire : **Polus, Camille et al**
**c/o Cabinet Lavoix 2, Place d'Estienne d'Orves**
**F-75441 Paris Cedex 09 (FR)**

## Description

La présente invention a pour objet une crépine d'aspiration de gazole dans un réservoir, notamment de véhicule, cette crépine étant pourvue d'un conduit de retour du gazole non utilisé par le moteur, des moyens étant prévus pour que le gazole retournant au réservoir soit ramené soit à l'intérieur de la crépine, soit à l'extérieur, en fonction de sa température.

On sait en effet qu'à froid il est intéressant de ramener à l'intérieur de la crépine le gazole non utilisé, afin d'accélérer la montée en température. On évite ainsi le risque de dépôt de paraffine dans les filtres, par temps froid. Par contre, lorsque la température du gazole atteint un certain seuil, il est nécessaire de dévier ce retour hors de la crépine, afin d'éviter une surchauffe préjudiciable au bon fonctionnement des pompes d'injection.

Les dispositifs de décharge connus comportent habituellement des vannes ou obturateurs mobiles actionnés par des éléments à cire (voir par exemple le GB-A-2 031 994).

La présente invention permet de résoudre le même problème par un moyen particulièrement simple et peu onéreux.

Suivant l'invention, lesdits moyens comprennent un orifice de décharge vers le réservoir, obturable par une lame flexible sensible à la température du gazole retournant au réservoir.

Dans un mode de réalisation, cette lame est mobile et fixée par une extrémité en aval de l'orifice et sur la même face du tronçon de section rectangulaire de manière à obturer ledit orifice à basse température et à s'écarter de ce dernier à partir d'un seuil de température déterminé en déviant alors le gazole hors de la crépine.

Un exemple de réalisation de l'invention fait l'objet de la description qui suit, en référence aux dessins joints dans lesquels :

- la Fig. 1 est une vue en coupe d'une crépine selon l'invention ;

- la Fig. 2 est une section selon la ligne II-II de la fig. 1.

La crépine représentée, destinée à l'alimentation d'un moteur diesel sur un véhicule automobile, est principalement constituée par un tronc de cône 1 fermé, à sa partie supérieure de plus grande section, par un couvercle 2.

Une partie importante de la surface du tronc de cône 1 est formée par un tamis 3, à travers lequel le gazole est filtré.

Avec le couvercle 2 font corps un conduit d'aspiration 4 et un conduit de retour 5 qui débouchent tous les deux à l'intérieur de la crépine.

Le conduit de retour 5 présente, à partir de sa base, un tronçon 6 de section rectangulaire et se termine, à sa partie supérieure par un embout 7 de section circulaire sur lequel se raccorde une tuyauterie 8 ramenant le gazole non utilisé par le moteur.

Une lame flexible thermo-sensible 9, telle qu'un bilame, est disposée dans le tronçon 6 et fixée, à sa partie inférieure, sur l'un des côtés du conduit au moyen d'un organe de fixation tel que par exemple un rivet 10.

A basse température, cette lame 9 est plaquée le long de ce côté, obturant de la sorte un orifice de décharge 11, ménagé dans le tronçon 6 et situé sur la même face de ce tronçon rectangulaire 6 que le rivet 10 qui est placé en aval de l'orifice 11.

Le fonctionnement du dispositif décrit est particulièrement simple :

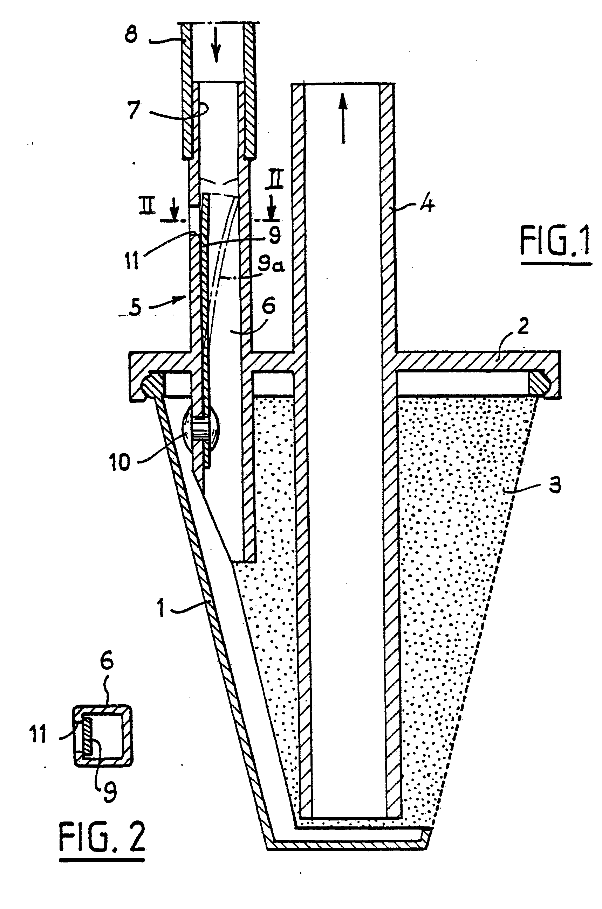

A partir d'un certain seuil de température, le bilame 9 commence à s'incurver jusqu'à occuper la position 9a représentée en traits interrompus sur la Figure 1 où il est écarté de l'orifice 11. Dans cette position, le gazole retournant dans le réservoir est dévié hors de la crépine, ce qui évite une surchauffe du gazole aspiré.

## Revendications

1. Crépine d'aspiration de gazole dans un réservoir, notamment de véhicule, pourvue d'un conduit de retour (5) du gazole non utilisé par le moteur, et de moyens agencés pour que le gazole retournant au réservoir soit ramené soit à l'intérieur de la crépine (1, 2), soit à l'extérieur de celle-ci en fonction de sa température, caractérisée en ce que lesdits moyens comprennent un orifice (11) de décharge vers le réservoir, obturable par une lame flexible (9) sensible à la température du gazole retournant au réservoir.

2. Crépine selon la revendication 1, caractérisée en ce que l'orifice (11) de décharge est ménagé dans un tronçon (6) de section sensiblement rectangulaire du conduit de retour (5), la lame flexible (9) étant mobile et fixée par une extrémité en aval de l'orifice (11) et sur la même face du tronçon (6) de section rectangulaire de manière à obturer ledit orifice (11) à basse température et à s'écarter de ce dernier à partir d'un seuil de température déterminé, en déviant alors le gazole hors de la crépine.

## Claims

1. Basket for the suction of gas oil from a tank, particularly of a vehicle, equipped with a conduit (5) for returning the gas oil not used by the engine, and with means designed to ensure that the gas oil returning to the tank is conveyed back either on the inside of the basket (1, 2) or on the outside of the latter, depending on its temperature, characterized in that the said means comprise an orifice (11) which is intended for discharge towards the tank and which can be shut off by a flexible strip (9) sensitive to the temperature of the gas oil returning to the tank.

2. Basket according to Claim 1, characterized in that the discharge orifice (11) is made in a portion (6) of substantially rectangular cross-section of the return conduit (5), the flexible strip (9) being movable and fastened at one end downstream of the orifice (11) and to the same face of the portion (6) of rectangular cross-section, so as to shut off the said orifice (11) at a low temperature and move aside from the latter beyond a specific temperature threshold, then diverting the gas oil outside the basket.

**Patentansprüche**

1. Gasöl-Saugkorb in einem Tank, insbesondere eines Fahrzeugs, welcher mit einer Rückleitung (5) für vom Motor nicht verwendetes Gasöl und mit Mitteln, die so eingerichtet sind, daß in den Tank zurückkehrendes Gasöl abhängig von seiner Temperatur entweder in den Saugkorb (1, 2) oder außserhalb desselben zurückgeführt wird, versehen ist, dadurch gekennzeichnet, daß die Mittel eine in den Tank führende Abgabeöffnung (11) aufweisen, welche durch eine biegsame Lamelle (9) verschließbar ist, die auf die Temperatur des in den Tank zurückkehrenden Gasöls empfindlich ist.

2. Saugkorb nach Anspruch 1, dadurch gekennzeichnet, daß die Abgabeöffnung (11) in einem im wesentlichen rechteckigen Querschnitt habenden Stück (6) der Rückleitung (5) ausgebildet ist, wobei die biegsame Lamelle (9) so beweglich und an einem Ende strömungsunterhalb der Öffnung (11) und an der gleichen Seite des Stücks (6) mit rechteckigem Querschnitt befestigt ist, daß sie die Öffnung (11) bei niedriger Temperatur verschließt und sich ab einer bestimmten Temperaturschwelle von dieser entfernt und dann das Gasöl aus dem Saugkorb ablenkt.

FIG.1

FIG. 2